# FASCICULE DE BREVET EUROPEEN

(11) **EP 1 722 923 B1**
(45) Date de publication et mention de la délivrance du brevet: **23.03.2016**
(21) Numéro de dépôt: 05708205.9
(22) Date de dépôt: 05.01.2005
(51) Int. Cl.: B24B 9/14, G02C 13/00, B24B 13/005

(54) **METHODE DE CENTRAGE MANUEL D' UNE LENTILLE OPHTALMIQUE DANS U N CENTREUR-BLOQUEUR ET DISPOSITIF CENTREUR-BLOQUEUR ASSOCIE**
VERFAHREN ZUR MANUELLEN ZENTRIERUNG EINER OPHTHALMISCHEN LINSE IN EINER ZENTRIER-/VERRIEGELUNGSVORRICHTUNG UND ZUGEHÖRIGE ZENTRIER-/VERRIEGELUNGSVORRICHTUNG
METHOD FOR MANUALLY CENTERING AN OPHTHALMIC LENS IN A CENTERING/LOCKING DEVICE AND ASSOCIATED CENTERING/LOCKING DEVICE

(30) Priorité: 24.02.2004 FR 0401858
(43) Date de publication de la demande: 22.11.2006
(73) Titulaire: ESSILOR INTERNATIONAL (COMPAGNIE GENERALE D'OPTIQUE), 94220 Charenton-le-Pont (FR)
(72) Inventeur: DIVO, Fabien Essilor International, F-94227 Charenton (FR)
(74) Mandataire: Chauvin, Vincent
(86) Numéro de dépôt international: PCT/FR2005/000010
(87) Numéro de publication internationale: WO 2005/092570

(56) Documents cités:
- EP-A- 0 409 760
- WO-A-01/25744
- WO-A-02/098606
- GB-A- 2 281 525
- US-A- 3 586 448
- US-A- 4 737 918
- US-A- 6 056 633

## Description

### DOMAINE TECHNIQUE AUQUEL SE RAPPORTE L'INVENTION

La présente invention concerne de manière générale le montage des lentilles ophtalmiques dans leur monture.

Elle concerne plus particulièrement une méthode de centrage manuel d'une lentille ophtalmique et un dispositif centreur-bloqueur pour la mise en oeuvre d'une telle méthode.

Un tel dispositif centreur-bloqueur est adapté à déterminer la position d'un centre optique dans le cas d'une lentille unifocale, la position d'un des centres optiques ou d'un point quelconque remarquable, dit de centrage, dans le cas d'une lentille bifocale ou trifocale, et est adapté également à déterminer certains parmi les repères que le fabricant fait usuellement figurer sur la surface des lentilles progressives. Le dispositif centreur-bloqueur est de plus adapté à déterminer par calcul un point de la surface de la lentille définissant l'emplacement au niveau duquel sera posé un pion de préhension.

### ARRIERE-PLAN TECHNOLOGIQUE

Les dispositifs centreur-bloqueurs sont des appareils courants dans le domaine de l'optique. Ils interviennent dans le processus de fabrication d'une paire de lunettes, juste avant l'usinage des lentilles ophtalmiques pour les adapter à la forme de la monture de lunettes sélectionnée.

Usuellement, une lentille ophtalmique « brute » se présente sous la forme sensiblement circulaire d'un diamètre suffisant pour pouvoir être montée convenablement dans le cercle de la monture choisie.

Un dispositif centreur-bloqueur est alors utilisé pour fixer sur la lentille ophtalmique concernée un pion de préhension généralement dénommé « gland ».

Ce pion de préhension servira, dans une étape ultérieure de fabrication, à entraîner la lentille ophtalmique en rotation pour procéder à son usinage.

La pose du pion de préhension sur la face avant de la lentille ophtalmique est réalisée en un point déterminé par le calcul en fonction notamment de la position du « centre optique » (au sens large du terme) ou plus généralement du point de centrage de la lentille, de la forme de la monture choisie et de certaines caractéristiques du porteur, à savoir son écart ou demi-écart pupillaire ainsi que la hauteur de montage (hauteur des pupilles par rapport à la partie inférieure des cercles de la monture).

Que ce soit en mode automatique ou en mode manuel, la plupart des dispositifs centreur-bloqueurs déjà connus détectent la position du centre optique ou des repères de centrage et/ou d'axage d'une lentille ophtalmique en éclairant ladite lentille au moyen d'un faisceau lumineux et en recueillant le faisceaux lumineux transmis au travers elle. Sur l'image obtenue, les dispositifs repèrent l'ombre des repères de centrage et/ou d'axage.

De tels dispositifs commettent une erreur de détection de la position des repères de centrage (typiquement la croix de montage ou les points de marquage issus d'un centrage sur un frontofocomètre) et/ou d'axage (les traits horizontaux) de la lentille ophtalmique. Cette erreur résulte des déviations prismatiques de l'ombre des repères, induites par la lentille elle-même, qui dépendent des puissances optiques sphérique, cylindrique et prismatique de la lentille ophtalmique dans la zone du repère considéré.

Par exemple, si la lentille ophtalmique à centrer présente une puissance prismatique latérale dans la zone du repère considéré, l'ombre du repère sur l'image apparaîtra décalée latéralement, dans la direction et dans la mesure correspondant à l'angle de ce prisme, par rapport à la position réelle du repère sur la face avant de ladite lentille.

De même, si la lentille ophtalmique présente une puissance torique, ces dispositifs centreur-bloqueurs peuvent commettre une erreur de détection du repère d'axage si l'axe formé par les repères et l'axe principal du tore correspondant ne sont pas parallèles ou perpendiculaires entre eux.

Au surplus en mode automatique ou en mode manuel, l'image observée par les moyens d'acquisitions du signal des dispositifs connus est affichée en temps réel sur l'écran de visualisation du dispositif, à l'intention de l'opérateur.

En mode automatique, l'opérateur peut ainsi surveiller et valider le déroulement de l'opération de centrage. En mode manuel, l'opérateur déplace la lentille ophtalmique à la main pour faire coïncider le repère de ladite lentille avec un viseur de centrage incrusté dans l'image affichée.

Ainsi tout calcul éventuel de correction l'erreur de détection précitée doit donc être effectué en temps en réel, ce qui impose des temps de réponse courts du calculateur en vue d'un affichage fluide. Néanmoins, les moyens matériels de calcul ne peuvent faire appel à des technologies trop coûteuses, en raison du prix du marché de ce type de dispositif centreur-bloqueur.

Pour tenter de remédier à ce problème d'erreur de détection du repère de centrage d'une lentille, le document EP 0 409 760 propose un dispositif centreur-bloqueur dans lequel, d'une part, le trajet optique du flux lumineux permettant de détecter la position du centre optique ou des repères de centrage et/ou d'axage de la lentille est inversé, à savoir la lentille ophtalmique est éclairée par l'arrière (sachant que les repères de centrage et/ou d'axage sont prévus sur la face avant de celle-ci) et le flux lumineux transmis par ladite lentille est recueilli du côté de la face avant de celle-ci, et, d'autre part, l'écran dépoli, permettant de recueillir le flux lumineux transmis en regard des moyens d'acquisition, est disposé au plus près de la face avant de la lentille à centrer de manière à limiter le trajet des rayons lumineux déviés avant d'être focalisés vers les moyens d'acquisition.

Toutefois cela nécessite que l'écran dépoli soit monté mobile sur le bâti du dispositif pour être escamoté de façon à permettre la dépose du pion de préhension à l'endroit déterminé de la face avant de la lentille ophtalmique.

Ce montage complexe de l'écran sur le bâti du dispositif augmente l'encombrement du dispositif, son coût de fabrication et surtout ne permet pas d'obtenir une précision pérenne des mesures.

GB-A-2281525 divulgue une méthode de centrage d'une lentille ophtalmique et un dispositif centreur-bloqueur selon l'état de l'art antérieur.

### OBJET DE L'INVENTION

Afin de remédier aux inconvénients précités de l'état de la technique, la présente invention propose une méthode de centrage dans un cercle de monture de lunettes d'une lentille ophtalmique pourvue d'au moins un repère de centrage et/ou d'axage, selon la revendication 1.

Avantageusement selon la méthode conforme à l'invention, à l'étape c) on acquiert l'ombre du contour de la lentille ophtalmique à centrer et à l'étape d) on affiche sur l'écran de visualisation d'une part cette ombre du contour de la lentille et d'autre part une image virtuelle représentative du cercle concerné de la monture, cette image virtuelle du cercle de monture étant décalée indépendamment du point de référence dudit cercle de monture, par rapport à la cible virtuelle de centrage associée audit cercle de monture, pour compenser les déviations prismatiques induites par la lentille à centrer.

L'invention a aussi pour objet une méthode de centrage et de blocage d'une lentille ophtalmique, comprenant le centrage de ladite lentille par la méthode précédemment définie et le dépôt d'un pion de préhension sur ladite lentille ophtalmique à un emplacement prédéterminé par rapport au point de référence du cercle de monture, compte tenu de la position corrigée de ce point de référence du cercle de monture calculée à l'étape f).

L'invention concerne également un dispositif centreur-bloqueur pour la mise en oeuvre de la méthode précitée, selon la revendication 7.

D'autres caractéristiques non limitatives et avantageuses du dispositif selon l'invention sont les suivantes :
- la figure géométrique couvre une superficie comprise entre 3 et 80 mm² ;
- la figure géométrique est filaire, distincte d'un point ou d'une croix, de manière à la distinguer d'un repère marqué d'une lentille ophtalmique ;
- la figure géométrique est un polygone, préférentiellement un triangle ;
- la figure géométrique est un cercle ou un ovale ;
- ledit moyen d'accueil, lesdits moyens d'éclairement, lesdits moyens d'acquisition et d'analyse et ledit support de signe transparent sont fixes les uns par rapport aux autres ;
- il comporte un trajet optique unique entre lesdits moyens d'éclairement et lesdits moyens d'acquisition et d'analyse ;
- ledit support de signe transparent est un écran actif transparent apte à afficher sélectivement la figure géométrique ;
- ledit écran transparent est un écran à cristaux liquides ;
- ledit support de signe transparent comprend une trame de motifs opaques répétés et réguliers ;
- ledit support de signe transparent comprend une matrice d'Hartmann ;
- il comprend des moyens pour poser un pion de préhension à un emplacement déterminé par calcul sur la face avant de ladite lentille ophtalmique ;
- lesdits moyens de pose du pion de préhension sont des moyens automatiques ;
- lesdits moyens de pose du pion de préhension sont des moyens manuels ;
- lesdits moyens d'acquisition et d'analyse comprennent une caméra numérique ;
- lesdits moyens d'acquisition et d'analyse comprennent des moyens de traitement d'image adaptés à traiter le signal obtenu en sortie de la caméra numérique et des moyens d'affichage du signal traité ; et
- lesdits moyens d'acquisition et d'analyse comprennent entre le support de signe transparent et la caméra numérique un système optique de renvoi du faisceau lumineux comportant un miroir incliné à 45°.

### DESCRIPTION DETAILLEE D'UN EXEMPLE DE REALISATION

La description qui va suivre en regard des dessins annexés, donné à titre d'exemples non limitatifs, fera bien comprendre en quoi consiste l'invention et comment elle peut être réalisée.

Sur les dessins annexés :
- la figure 1 est une vue générale en perspective d'un dispositif centreur-bloqueur selon l'invention ;
- la figure 2 est un schéma optique du dispositif de la figure 1 ;
- la figure 3 est une vue schématique de dessus des motifs du support de signe transparent du dispositif de la figure 1,
- la figure 4 est un algorithme d'une méthode de centrage selon l'invention avec l'affichage furtif du support de signe transparent du dispositif de la figure 1,
- la figure 5A est un schéma du référentiel de la caméra,
- la figure 5B est un schéma du référentiel d'affichage, et
- la figure 5C est un schéma superposant les deux référentiels des figures 5A et 5B.

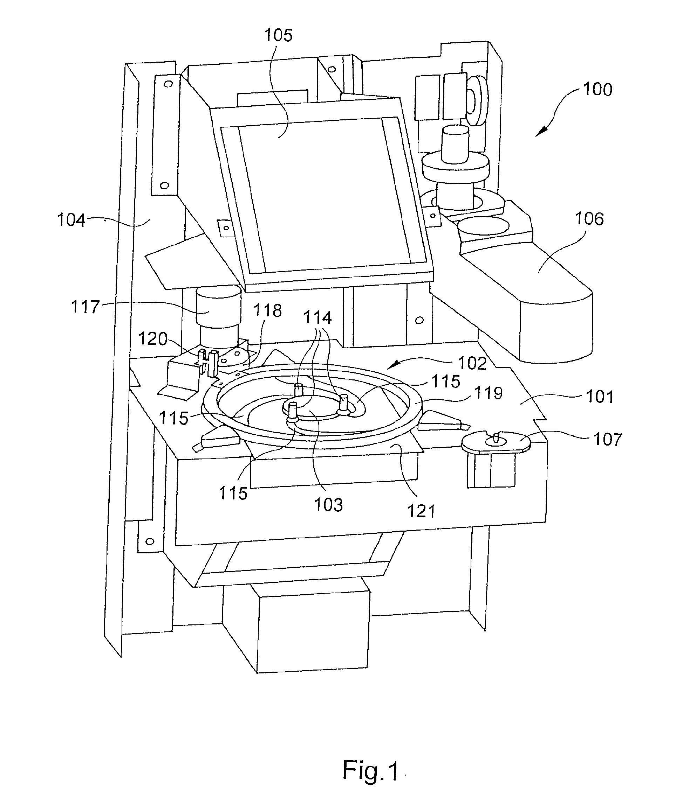

Sur la figure 1 on a représenté schématiquement un mode de réalisation d'un dispositif centreur-bloqueur 100 selon l'invention qui comporte un pupitre de travail 101 sur lequel est disposé un mécanisme de centrage 102 d'une lentille ophtalmique 103. Il peut s'agir d'une lentille unifocale, bifocale, trifocale ou encore d'une lentille ophtalmique à addition progressive de puissance.

Le dispositif centreur-bloqueur 100 comporte en outre un écran de visualisation 105 fixé sur le bâti 104 de manière à être orienté pour être visible de l'utilisateur travaillant au pupitre de travail 101.

Le mécanisme de centrage 102 du pupitre de travail 101 comporte ici un jeu de trois mors 114 à serrage concentrique portés chacun par un bras 115 pivotant autour d'un axe (non visible sur la figure 1) fixe par rapport au pupitre de travail 101. Les bras sont agencés de manière que leur rotation conjointe autour de leur axe respectif permet le rapprochement des trois mors 114.

Le serrage des mors 114 est commandé par un moteur 117 dont l'axe est solidaire d'un pignon 118 engrenant sur une couronne 119 adaptée à entraîner les bras 115 en rotation autour de leur axe.

Les bras 115 comportent en effet chacun une portion dentée semi-circulaire (non représentée) engrenant avec la périphérie externe de la couronne 119.

La rotation du pignon 118, sous l'action du moteur 117, entraîne ainsi en rotation la couronne 119 pour provoquer le serrage ou le desserrage des mors 114, en fonction du sens dans lequel est entraînée la couronne 119. Une cellule 120, optique ou électromagnétique, permet au moteur 117 de connaître la position de la couronne 119.

L'ensemble formé par les bras 115 portant les mors 114, et par la couronne 119 est disposé au-dessus d'une plaque support 121 adaptée à laisser passer la lumière.

Par ailleurs, comme le montre la figure 1, le dispositif centreur-bloqueur comporte un bras de positionnement 106, préférentiellement automatisé, relié au bâti 104, et adapté à prendre à l'aide d'une pince un pion de préhension disposé sur un réceptacle 107 et à venir le déposer à un emplacement déterminé par calcul sur la face avant de ladite lentille ophtalmique 103.

Dans cette optique, le dispositif centreur-bloqueur 100 est adapté à détecter la position d'un repère de centrage et/ou d'axage de la lentille ophtalmique 103.

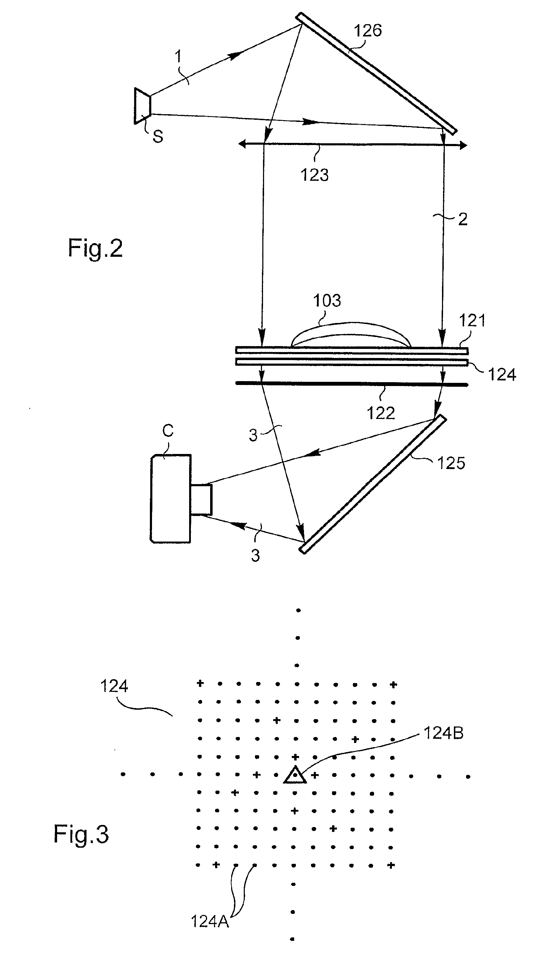

Pour cela, comme le montre schématiquement la figure 2, il comprend avantageusement :
- un moyen d'accueil de la lentille ophtalmique 103,
- de part et d'autre dudit moyen d'accueil, d'une part, des moyens d'éclairement de la lentille ophtalmique 103 installée sur ledit moyen d'accueil et, d'autre part, des moyens d'acquisition et d'analyse de la lumière transmise par ladite lentille ophtalmique 103, et
- un support transparent 124 pour un signe opaque 124A,124B, activable et désactivable, disposé entre ledit moyen d'accueil et lesdits moyens d'acquisition et d'analyse.

Le moyen d'accueil est constitué ici par la plaque support 121 transparente à la lumière.

Selon l'exemple représenté, les moyens d'éclairement comprennent une source de lumière S qui émet un faisceau lumineux divergent 1 en direction d'un système de renvoi comportant un miroir 126 incliné à 45° et une lentille convergente 123 adaptée à former un flux lumineux 2 à rayons parallèles en direction de la lentille ophtalmique 103 déposée sur la plaque support 121 avec sa face avant, pourvue du ou des repères de centrage et/ou d'axage, tournée vers ladite lentille convergente 123.

Les moyens d'acquisition et d'analyse comprennent ici une caméra numérique C, des moyens de traitement d'image (non représentés) adaptés à traiter le signal obtenu en sortie de la caméra numérique C et des moyens d'affichage du signal traité constitué par l'écran de visualisation 105. Lesdits moyens d'acquisition et d'analyse comprennent entre le support de signe transparent 124 et la caméra numérique C un système optique de renvoi du faisceau lumineux transmis par la lentille ophtalmique 103 comportant une plaque dépolie 122 formant écran et un miroir 125 incliné à 45°. La caméra numérique C recueille, via le renvoi angulaire optique opéré par le miroir incliné 125, les images ou ombres projetées sur l'écran dépoli 122.

Avantageusement, dans le dispositif centreur-bloqueur 100, redit moyen d'accueil, lesdits moyens d'éclairement, lesdits moyens d'acquisition et d'analyse et ledit support de signe transparent sont fixes les uns par rapport aux autres.

En outre, comme le montre la figure 2, il comporte un trajet optique unique entre lesdits moyens d'éclairement et lesdits moyens d'acquisition et d'analyse, ce qui présente l'avantage de réduire l'encombrement et les coûts de fabrication du dispositif et surtout de permettre d'obtenir une précision pérenne de mesure.

Selon une caractéristique du dispositif centreur-bloqueur 100, ledit support de signe transparent 124 est un écran actif transparent apte à afficher, lorsqu'il est convenablement activé par une unité électronique de pilotage associée, ledit signe opaque. Il s'agit, par exemple, d'un écran à cristaux liquides.

Lorsqu'il n'est pas activé le support de signe transparent 124 est équivalent à la plaque support 121 transparente et ne montre aucun signe opaque.

Lorsqu'il est activé le support de signe transparent 124 affiche le ou les signes opaques utilisés pour détecter la position des repères de centrage et/ou d'axage de la lentille ophtalmique 103.

Comme le montre plus particulièrement la figure 3, ledit support de signe transparent 124 comprend une trame de motifs 124A opaques répétés et réguliers. En particulier, il comprend une matrice de Hartmann.

En outre, comme le montre également la figure 3, ledit support de signe transparent 124 comporte, préférentiellement en son centre, une figure géométrique 124B dont la dimension maximale hors tout est comprise entre 2 et 10 mm. Cette figure géométrique 124B couvre une superficie comprise entre 3 et 80 mm². Elle est filaire, distincte d'un point ou d'une croix, de manière à la distinguer d'un repère marqué d'une lentille ophtalmique. Ici la figure géométrique 124B est un polygone, préférentiellement comme en l'espèce un triangle isocèle ayant une base de 4 mm, mais selon des variantes non représentées, cette figure géométrique peut être un cercle ou un ovale.

Le dispositif centreur-bloqueur 100 décrit ci-dessus permet la mise en oeuvre d'une méthode de détection automatique de la position d'un repère de centrage et/ou d'axage de la lentille ophtalmique 103 dans le cercle correspondant de la monture dans laquelle elle doit être montée. Cette méthode comporte les étapes suivantes.

### Etape a

A titre de calibrage on acquiert et on mémorise l'ombre de la matrice 124A et l'ombre du signe opaque 124B ménagé sur le support de signe transparent 124 activé et éclairé seul par le moyens d'éclairement S.

### Etape b

On superpose la lentille ophtalmique 103 et le support de signe transparent 124 activé.

### Étape c

On acquiert et on mémorise dans une mémoire vive (RAM) des moyens de traitement l'ombre du signe dudit support éclairé par les moyens d'éclairement S.

### Étape d

On acquiert et on mémorise dans la mémoire vive (RAM) des moyens de traitement l'ombre du repère de centrage et/ou d'axage de la lentille ophtalmique 103 lorsqu'elle est éclairée par les moyens d'éclairement S, le support transparent étant désactivé et ne présentant donc aucun signe opaque.

### Étape e

On déduit de la déviation prismatique de la matrice 124A - ou de la figure géométrique 124B en cas d'échec de la méthode de détection avec le réseau 124A (en raison par exemple de difficultés de reconnaissance d'image engendrant une confusion dans la détection des points déviés du réseau, en particulier par confusion avec une gravure de la lentille - mesurée par comparaison des acquisitions réalisées aux étapes a) et c), la position corrigée non déviée dudit repère sur la face avant de ladite lentille ophtalmique

Cette méthode de détection automatique de la position du repère de centrage et/ou d'axage de la lentille ophtalmique va permettre de centrer la lentille ophtalmique 103 pour déposer à un endroit déterminé sur la face avant de la lentille 103 le pion de préhension qui va permettre de bloquer et d'entraîner ultérieurement en rotation la lentille 103 dans une meuleuse pour la conformer au cercle de la monture choisie.

Classiquement, la lentille à centrer et/ou axer 103 possède un ou plusieurs repères de centrages. On distingue parmi ces repères d'une part un repère de centrage matérialisant le point de centrage de la lentille et habituellement réalisé sous la forme d'un point ou d'une croix (ou de tout autre motif) et d'autre part, éventuellement, un ou plusieurs repère d'axage matérialisant l'axe d'astigmatisme de la lentille et habituellement réalisé sous la forme d'un segment ou d'un point (ou de tout autre motif).

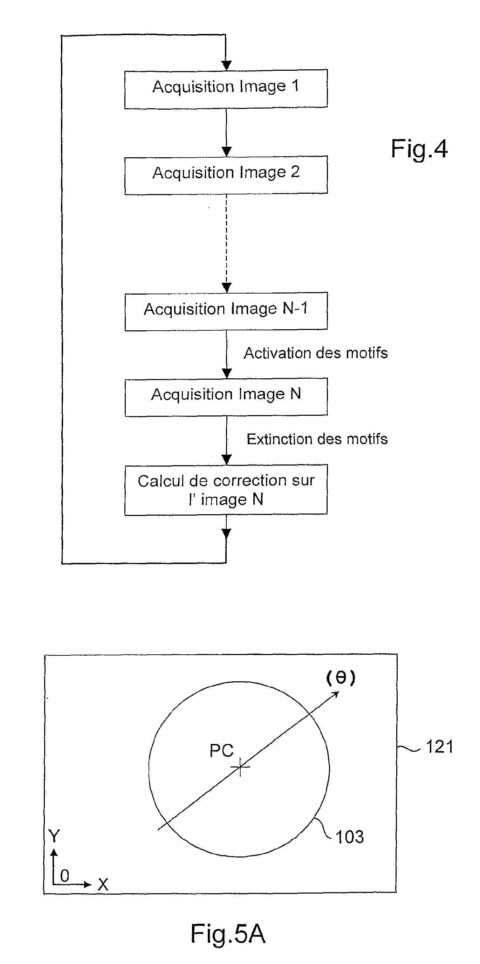

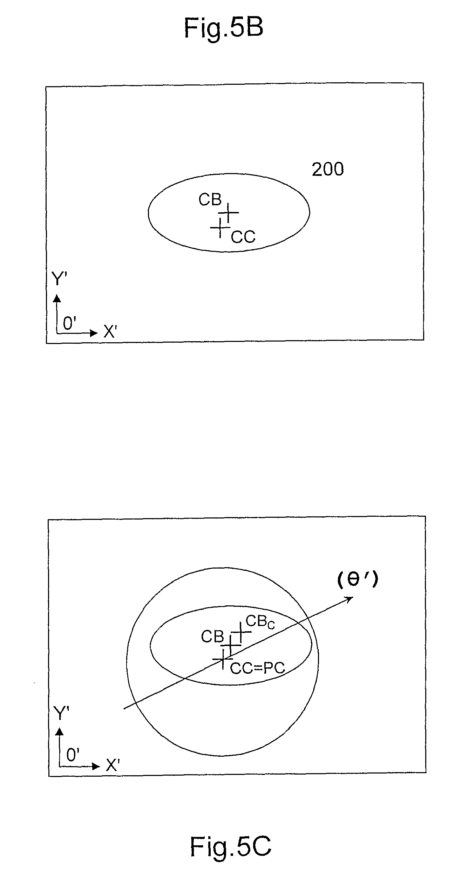

Pour centrer et éventuellement axer automatiquement ou manuellement ladite lentille ophtalmique 103, préliminairement aux étapes a) à d) énoncées ci-dessus, l'opérateur indique au dispositif centreur-bloqueur, via un clavier de commande, le type de lentille ophtalmique à centrer, la position relative souhaitée du point de centrage PC de la lentille 103 (voir figure 5A à 5C) par rapport au centre boxing CB qui est le centre de la monture choisie (voir définition ci-dessous en relation avec les figures 5B et 5C) ainsi qu'éventuellement pour les lentilles ophtalmiques unifocales cylindriques l'orientation souhaitée de son axe.

En effet, les paramètres précités respectent une convention de centrage qui inclut d'une part un référentiel de mesure (O, X, Y) lié à la caméra et représenté sur la figure 5A et d'autre part un référentiel d'affichage (O', X', Y') lié à la monture et représenté sur la figure 5B.

Dans le référentiel de mesure (O, X, Y) on acquiert avec la caméra C le point de centrage PC de la lentille ophtalmique repéré par les coordonnées X_{PC}, Y_{PC}, ainsi, le cas échéant, que le ou les repères d'axage de la lentille 103.

Concrètement, la nature du point de centrage dépend du type de la lentille considérée.

Dans le cas d'une lentille unifocale, le point de centrage PC est le centre optique préalablement marqué au moyen d'un frontofocomètre externe.

Dans le cas d'une lentille bifocale, le point de centrage PC est le centre du segment de la pastille.

Dans le cas d'une lentille à addition progressive de puissance, le point de centrage PC est la croix de centrage.

D'autre part comme le montre la figure 5A, l'orientation de la lentille ophtalmique est repérée par un angle θ qui est l'angle entre un axe particulier de la lentille et l'axe X du référentiel de mesure.

Cet axe particulier est selon le cas :
- l'axe du cylindre pour une lentille unifocale torique,
- l'axe des marquages horizontaux pour une lentille progressive, et
- l'axe du segment de la pastille pour une lentille bifocale.

Le référentiel d'affichage (O', X', Y') concerne la monture choisie. Cette monture possède deux cercles (de forme quelconque non nécessairement circulaire) accueillant chacun une lentille. En l'espèce, le cercle concerné présente une forme courbe dans le référentiel d'affichage (O', X', Y'). Un centre est défini pour le cercle de monture. Conventionnellement, on pourra par exemple définir comme centre du cercle de monture, le centre du rectangle dans lequel est inscrit le cercle de monture. Ce centre appelé « centre boxing » est CB noté aux figures 5B et 5C et est repéré par ses coordonnées X'_{CB}, Y'_{CB} dans le repère (O', X', Y').

Le pion de préhension est fixé généralement sur la lentille au centre boxing CB.

L'écart souhaité en X et en Y entre le point de centrage PC et le centre CB est saisi par l'opérateur dans le dispositif centreur-bloqueur 100. Il dépend de la prescription, de la morphologie du porteur et de la forme de la monture.

Cet écart présente les coordonnées suivantes dans le référentiel (O', X', Y') : δX' = X'_{PC} - X'_{CB}, δY' = Y'_{PC} - Y'_{CB} (voir figure 5C).

Sur la figure 5C, on a noté θ' l'angle souhaité pour l'axe de la lentille ophtalmique dans le référentiel d'affichage (O', X', Y') et donc dans le référentiel de la monture (voir figure 5C).

Après avoir entré les paramètres de centrage précités dans le dispositif centreur-bloqueur, l'opérateur dépose la lentille sur son support et l'opération de centrage peut débuter.

On prévoit deux modes de fonctionnement : un mode automatique et un mode semi-automatique ou manuel assisté.

En mode automatique, tout d'abord, l'opérateur dépose dans une position quelconque la lentille ophtalmique 103 sur la plaque support 121 transparente (voir figure 1) avec sa face avant tournée vers lesdits moyens d'éclairement. Lorsque l'entrée des paramètres est validée, les mors 114 serrent la lentille ophtalmique 103 et l'opération de centrage débute.

Les étapes a) à d) de la méthode de détection sont alors effectuées sur la lentille ophtalmique 103.

Puis après l'étape d), lorsqu'il s'agit d'une lentilles ophtalmique unifocale, on effectue une rotation, une translation de l'image obtenue à l'étape c) de façon à placer le point de centrage et l'axe de la lentille ophtalmique dans la position souhaitée dans le référentiel affichage avant d'afficher l'image ainsi calculée avec en incrustation le contour de la lentille ophtalmique et la forme de la monture (voir figure 5C).

Lorsqu'il s'agit d'une lentille ophtalmique à addition progressive de puissance ou d'une lentille ophtalmique bifocale, après l'étape d) de calcul de la position corrigée non déviée dudit repère de centrage sur la face avant de ladite lentille ophtalmique, on effectue une rotation, une translation de l'image obtenue à l'étape c) de façon à placer le point de centrage et l'axe de la lentille ophtalmique dans la position souhaitée dans le référentiel affichage avant d'afficher l'image ainsi calculée avec en incrustation le contour de la lentille ophtalmique et la forme de la monture (voir figure 5C). La correction de la déviation du faisceau lumineux transmis au travers de la lentille est répercutée sur l'affichage en déplaçant l'image de la forme de la monture.

Lorsque le dispositif centreur-bloqueur 100 fonctionne en mode manuel, les mors 114 sont resserrés à vide afin de former un trépied sur lequel est positionnée la lentille ophtalmique 103 à centrer. L'image de la lentille ophtalmique 103 observée par la caméra numérique C est affichée en temps réel sur l'écran de visualisation 105 du dispositif centreur-bloqueur 100.

Lorsqu'il s'agit d'une lentille ophtalmique unifocale, son centre optique et éventuellement son axe sont préalablement marqués à l'aide d'un frontofocomètre.

Puis, à l'aide du dispositif centreur-bloqueur 100 on réalise les étapes suivantes.

### Etape a)

A titre de calibrage, on acquiert et mémorise l'ombre de la figure géométrique 124B prédéfinie ménagée sur le support de signe transparent 124 éclairé seul par les moyens d'éclairement, la figure géométrique, ici un triangle, présentant une dimension maximale hors tout comprise entre 2 et 10 mm.

### Etape b)

On superpose la lentille ophtalmique 103 et le support de signe transparent 124.

### Étape c)

On acquiert et on mémorise l'ombre de ladite figure géométrique 124B dudit support 124 déviée par ladite lentille ophtalmique 103 lorsque celle-ci et ledit support 124 sont éclairés par les moyens d'éclairement S.

### Étape d)

A l'aide des moyens d'acquisition, c'est-à-dire de la caméra C, on acquiert, sans la mémoriser, l'ombre du repère de centrage et/ou d'axage PC de la lentille ophtalmique 103 lorsqu'elle est éclairée par lesdits moyens d'éclairement S.

On acquiert simultanément l'ombre du contour de la lentille ophtalmique à centrer 103.

### Étape e)

On affiche sur l'écran de visualisation 105, d'une part l'ombre du repère de centrage et/ou d'axage PC de la lentille ophtalmique 103 et d'autre part une cible virtuelle de centrage CC correspondant à la position voulue du repère de centrage PC de la lentille 103 par rapport à un point de référence CB du cercle 200 de la monture.

On affiche simultanément sur l'écran de visualisation 105 d'une part cette ombre du contour de la lentille 103 et d'autre part une image virtuelle 200 représentative du cercle concerné de la monture. Cette image virtuelle du cercle de monture 200 est, par calcul, décalée indépendamment du point de référence CB dudit cercle de monture, par rapport à la cible virtuelle de centrage CC associée au cercle de monture 200, pour compenser les déviations prismatiques induites par la lentille à centrer 103.

### Étape f)

On déduit de la déviation prismatique de la figure géométrique 124B mesurée par comparaison des acquisitions réalisées aux étapes a) et c), une position relative corrigée CBc du point de référence CB du cercle de monture 200 par rapport au repère de centrage PC de la lentille ophtalmique 103, ou inversement.

### Étape g)

On déplace manuellement la lentille 103 pour mettre en coïncidence manuellement l'ombre du repère de centrage PC de la lentille 103 et la cible virtuelle de centrage CC.

L'ordre des étapes a) à g) n'est pas nécessairement celui dans lequel ces étapes apparaissent ci-dessus, mais peut au contraire varier en fonction du mode opératoire retenu.

Dans un mode d'exécution particulièrement avantageux, les étapes c) à f) sont réalisées en boucle, à la suite des étapes a) et b), de façon à obtenir en continu une position relative corrigée CBc du point de référence CB du cercle de monture 200.

L'opérateur déplace manuellement la lentille pour effectuer une rotation et/ou une translation de l'image obtenue à l'étape c) de façon à placer le point de centrage et l'axe de la lentille ophtalmique dans la position souhaitée dans le référentiel affichage avant d'afficher l'image ainsi calculée avec en incrustation le contour de la lentille ophtalmique et la forme de la monture (voir figure 5C). La correction de la déviation du faisceau lumineux transmis au travers de la lentille est répercutée en temps réel sur l'affichage en déplaçant en conséquence l'image de la forme du cercle 200 de la monture.

Dans un autre mode d'exécution, plus simple à mettre en oeuvre, les étapes d) et e) sont réalisées en boucle, à la suite des étapes a) et b) et les étapes c) et f) sont réalisées une seule fois à la suite de l'étape g). La correction de l'erreur de déviation du repère de centrage n'est alors pas répercutée sur l'écran de visualisation, mais est directement prise en compte dans les informations de positionnement transmises au bras de blocage pour le dépôt d'un pion de préhension.

Selon une variante de réalisation de la méthode de centrage manuel précitée, on propose de combiner les avantages de la correction de la déviation prismatique de la position du repère de la lentille et le confort d'affichage pour l'opérateur, en affichant les motifs 124A, 124B du support de signe transparent 124 de façon cyclique, en synchronisant l'acquisition de l'image de la lentille 103 lorsque lesdits motifs 124A, 124B sont activés et en calculant la correction de la déviation prismatique induite par la lentille sur cette image capturée conformément au cycle représenté sur la figure 4.

Plus particulièrement, la méthode de centrage manuel de la lentille ophtalmique 103 à l'aide du dispositif centreur-bloqueur comporte les étapes suivantes.

### Etape a)

A titre de calibrage, on acquiert et on mémorise l'ombre d'un signe opaque (la figure géométrique 124B par exemple) ménagé sur le support de signe transparent 124 interposé entre les moyens d'éclairement S et les moyens d'acquisition et d'analyse C, lorsque ledit support 124 est éclairé seul par lesdits moyens d'éclairement.

### Etape b)

On superpose ladite lentille ophtalmique 103 et le support de signe transparent 124.

### Étape c)

On acquiert et on mémorise l'ombre du signe opaque 124A, 124B dudit support 124 déviée par ladite lentille ophtalmique 103 lorsque celle-ci et ledit support 124 sont éclairés conjointement par les moyens d'éclairement S.

### Étape d)

On acquiert avec les moyens d'acquisition C l'ombre du repère de centrage et/ou d'axage PC de la lentille ophtalmique 103 lorsqu'elle est éclairée par lesdits moyens d'éclairement.

On acquiert simultanément l'ombre du contour de la lentille ophtalmique à centrer 103.

### Étape e)

On affiche sur un écran de visualisation 105, d'une part, en direct des moyens d'acquisition et d'analyse, les ombres de la lentille ophtalmique 103, du repère de centrage PC de la lentille 103 et du signe opaque 124B lorsqu'il est activé, et d'autre part, une cible virtuelle de centrage CC correspondant à la position voulue du repère de centrage PC de la lentille à centrer 103 par rapport à un point de référence CB du cercle 200 de monture. Le signe opaque 124B du support de signe transparent 124 est affichée de façon intermittente pendant une durée d'affichage suffisamment courte pour que l'oeil humain ne perçoive pas son ombre sur l'écran de visualisation.

On affiche sur l'écran de visualisation 105 d'une part cette ombre du contour de la lentille 103 et d'autre part une image virtuelle 200 représentative du cercle concerné de la monture. Cette image virtuelle du cercle de monture 200 est décalée indépendamment du point de référence CB dudit cercle de monture, par rapport à la cible virtuelle de centrage CC associée audit cercle de monture, pour compenser les déviations prismatiques induites par la lentille à centrer 103.

### Etape f)

On déduit de la déviation prismatique de la figure géométrique 124B mesurée par comparaison des acquisitions réalisées aux étapes a) et c), une position relative corrigée CBc du point de référence CB du cercle de monture 200 par rapport au repère de centrage PC, ou inversement.

### Etape g)

On met en coïncidence, en déplaçant manuellement la lentille ophtalmique 103, le repère de centrage PC de la lentille ophtalmique 103 et la cible virtuelle de centrage CC.

Ici encore, l'ordre des étapes a) à g) n'est pas nécessairement celui dans lequel ces étapes apparaissent ci-dessus, mais peut au contraire varier en fonction du mode opératoire retenu. L'opérateur déplace manuellement la lentille pour effectuer une rotation et/ou une translation de l'image obtenue à l'étape c) de façon à placer le point de centrage et l'axe de la lentille ophtalmique dans la position souhaitée dans le référentiel affichage avant d'afficher l'image ainsi calculée avec en incrustation le contour de la lentille ophtalmique et la forme de la monture (voir figure 5C). La correction de la déviation du faisceau lumineux transmis au travers de la lentille est répercutée en temps réel sur l'affichage en déplaçant en conséquence l'image de la forme de la monture.

Dans un mode d'exécution particulièrement avantageux, les étapes c) à f) sont réalisées en boucle, à la suite des étapes a) et b), de façon à obtenir en continu une position relative corrigée CBc du point de référence CB du cercle de monture (200).

Dans un autre mode d'exécution, plus simple à mettre en oeuvre, les étapes d) et e) sont réalisées en boucle, à la suite des étapes a) et b) et les étapes c) et f) sont réalisées une seule fois à la suite de l'étape g). La correction de l'erreur de déviation du repère de centrage n'est alors pas répercutée sur l'écran de visualisation, mais est directement prise en compte dans les informations de positionnement transmises au bras de blocage pour le dépôt d'un pion de préhension.

Ainsi, avantageusement, grâce à cette méthode selon l'invention, on supprime l'affichage sur l'écran de visualisation de l'ombre du signe opaque du support transparent qui sert à déterminer la déviation prismatique de la position du repère de la lentille et à corriger l'erreur de détection en résultant. On évite ainsi de perturber la lecture de l'écran de l'opérateur qui ne voit à l'écran que l'image de la lentille et celle du viseur, tout en tenant compte de la correction de la déviation prismatique déterminée.

Cette méthode de centrage participe au blocage de la lentille ophtalmique 103. C'est ainsi qu'après le centrage de ladite lentille par la méthode précédemment décrite, on procède, au moyen du bras de positionnement automatique 106, au dépôt d'un pion de préhension à un emplacement prédéterminé sur la lentille ophtalmique 103.

L'unité de traitement électronique calcule pour cela l'emplacement corrigé où le loin de préhension est déposé en tenant compte de la position corrigée CBc du point de référence CB du cercle de monture 200 calculée à l'étape f).

La présente invention n'est nullement limitée aux modes de réalisation décrits et représentés mais l'homme du métier saura y apporter toute variante conforme à son esprit.

## Revendications

1. Méthode de centrage d'une lentille ophtalmique (103) pourvue d'au moins un repère de centrage et/ou d'axage (PC) dans un cercle (200) de monture de lunettes, comportant les étapes consistant à :
a) à titre de calibrage, acquérir et mémoriser l'ombre d'une signe opaque (124A ; 124B) ménagée sur un support de signe transparent (124) interposé entre des moyens d'éclairement (S) et des moyens d'acquisition (C), lorsque ledit support est éclairé seul par lesdits moyens d'éclairement,
b) superposer ladite lentille ophtalmique et ledit support de signe transparent,
c) acquérir et mémoriser l'ombre du signe opaque dudit support déviée par ladite lentille ophtalmique lorsque ladite lentille ophtalmique et ledit support sont éclairés conjointement par lesdits moyens d'éclairement,
d) acquérir avec les moyens d'acquisition (C) l'ombre du repère de centrage et/ou d'axage (PC) de la lentille ophtalmique à centrer (103) lorsqu'elle est éclairée par lesdits moyens d'éclairement,
e) afficher sur un écran de visualisation (105) d'une part l'ombre du repère de centrage et/ou d'axage (PC) de la lentille ophtalmique (103) et d'autre part une cible virtuelle de centrage (CC) correspondant à la position voulue du repère de centrage (PC) de la lentille (103) par rapport à un point de référence (CB) du cercle (200) de la monture,
f) déduire de la déviation prismatique du signe opaque (124A ; 124B) mesurée par comparaison des acquisitions réalisées aux étapes a) et c), une position relative corrigée (CBc) du point de référence (CB) du cercle de monture (200) par rapport au repère de centrage (PC), ou inversement,
g) mettre en coïncidence l'ombre du repère de centrage (PC) de la lentille ophtalmique (103) et la cible virtuelle de centrage (CC).

2. Méthode de centrage selon la revendication 1, **caractérisée en ce que** les étapes c) à f) sont réalisées en boucle, à la suite des étapes a) et b), de façon à obtenir en continu une position relative corrigée (CBc) du point de référence (CB) du cercle de monture (200).

3. Méthode de centrage selon la revendication 2, **caractérisée en ce qu'**à l'étape c) on acquiert l'ombre du contour de la lentille ophtalmique à centrer (103) et à l'étape d) on affiche sur l'écran de visualisation (105) d'une part cette ombre du contour de la lentille (103) et d'autre part une image virtuelle (200) représentative du cercle concerné de la monture, cette image virtuelle du cercle de monture (200) étant décalée indépendamment du point de référence (CB) dudit cercle de monture, par rapport à la cible virtuelle de centrage (CC) associée audit cercle de monture, pour compenser les déviations prismatiques induites par la lentille à centrer (103).

4. Méthode de centrage selon la revendication 1, **caractérisée en ce que** les étapes d) et e) sont réalisées en boucle, à la suite des étapes a) et b) et les étapes c) et f) sont réalisées à la suite de l'étape g).

5. Méthode de centrage selon l'une des revendications précédentes, **caractérisée en ce qu'**à l'étape e), on affiche sur l'écran de visualisation (105), d'une part, en direct des moyens d'acquisition et d'analyse (C), les ombres de la lentille ophtalmique à centrer (103), du repère de centrage et/ou d'axage (PC) de ladite lentille ophtalmique (103), et du signe opaque (124A ; 124B) lorsqu'il est activé, et d'autre part, la cible virtuelle de centrage (CC), le signe opaque (124A ; 124B) du support de signe transparent (124) étant activé de façon intermittente pendant une durée suffisamment courte pour que l'oeil humain ne perçoive pas son ombre sur l'écran de visualisation.

6. Méthode de centrage et de blocage d'une lentille ophtalmique, comprenant le centrage de ladite lentille par la méthode selon l'une des revendications précédentes et le dépôt d'un pion de préhension à un emplacement prédéterminé sur ladite lentille ophtalmique, compte tenu de la position corrigée (CBc) du point de référence (CB) du cercle de monture (200) calculée à l'étape f).

7. Dispositif centreur-bloqueur comprenant :
- un moyen d'accueil (121, 114) de la lentille ophtalmique (103),
- de part et d'autre dudit moyen d'accueil, d'une part, des moyens d'éclairement (S) de la lentille ophtalmique (103) installée sur ledit moyen d'accueil et, d'autre part, des moyens d'acquisition et d'analyse (C) de la lumière transmise par ladite lentille ophtalmique,
- un support transparent (124) comportant un signe opaque représentant une figure géométrique présentant une dimension maximale hors tout comprise entre 2 et 10 mm, activable et désactivable, disposé entre ledit moyen d'accueil et lesdits moyens d'acquisition et d'analyse, et
- une unité de traitement électronique programmée pour mettre automatiquement en oeuvre les étapes c) à f) de la méthode de centrage de la revendication 6.

8. Dispositif selon la revendication 7, **caractérisé en ce que** la figure géométrique (124B) couvre une superficie comprise entre 3 et 80 mm2.

9. Dispositif selon l'une des revendications 7 ou 8, **caractérisé en ce que** la figure géométrique (124B) est de forme distincte d'un point ou d'une croix, apte à être visuellement distinguée d'un repère marqué d'une lentille ophtalmique.

10. Dispositif selon l'une des revendications 7 à 9, **caractérisé en ce que** la figure géométrique (124B) est un polygone, préférentiellement un triangle.

11. Dispositif selon l'une des revendications 7 à 9, **caractérisé en ce que** la figure géométrique est un cercle ou un ovale.

12. Dispositif selon l'une des revendications 7 à 11, **caractérisé en ce que** ledit moyen d'accueil, lesdits moyens d'éclairement, lesdits moyens d'acquisition et d'analyse et ledit support de signe transparent sont fixes les uns par rapport aux autres.

13. Dispositif selon l'une des revendications 7 à 12, **caractérisé en ce qu'**il comporte un trajet optique unique entre lesdits moyens d'éclairement (S) et lesdits moyens d'acquisition et d'analyse (C).

14. Dispositif selon l'une des revendications 7 à 13, **caractérisé en ce que** ledit support de signe transparent (124) est un écran actif transparent apte à afficher sélectivement la figure géométrique.

15. Dispositif selon la revendication 14, **caractérisé en ce que** ledit écran transparent est un écran à cristaux liquides.

16. Dispositif selon l'une des revendications 7 à 15, **caractérisé en ce que** ledit support de signe transparent comprend une trame de motifs opaques répétés et réguliers.

17. Dispositif selon la revendication 16, **caractérisé en ce que** ledit support de signe transparent comprend une matrice de Hartmann.

## Patentansprüche

1. Verfahren zum Zentrieren einer Augenlinse (103), die mit wenigstens einer Zentrierungs- und/oder Achsenausrichtungsmarkierung (PC) in einem Brillengestell-Kreis (200) versehen ist, das die folgenden Schritte umfasst, die darin bestehen:
a) zur Kalibrierung den Schatten eines lichtundurchlässigen Zeichens (124A; 124B), das auf einem lichtdurchlässigen Zeichenträger (124) ausgebildet ist, der zwischen Beleuchtungsmittel (S) und Erfassungsmittel (C) eingefügt ist, zu erfassen und zu speichern, wenn der Träger nur durch die Beleuchtungsmittel beleuchtet wird,
b) die Augenlinse und den lichtdurchlässigen Zeichenträger zu überlagern,
c) den Schatten des lichtundurchlässigen Zeichens des Trägers, der durch die Augenlinse verschoben wird, zu erfassen und zu speichern, wenn die Augenlinse und der Träger durch die Beleuchtungsmittel gemeinsam beleuchtet werden,
d) mit den Erfassungsmitteln (C) den Schatten der Zentrierungs- und/oder Achsenausrichtungsmarkierung (PC) der zu zentrierenden Augenlinse (103) zu erfassen, wenn sie durch die Beleuchtungsmittel beleuchtet wird,
e) auf einem Anzeigeschirm (105) einerseits den Schatten der Zentrierungs- und/oder AchsenausrichtungsMarkierung (PC) der Augenlinse (103) und andererseits ein virtuelles Zentrierungsziel (CC), das der gewünschten Position der Zentrierungsmarkierung (PC) der Linse (103) in Bezug auf einen Bezugspunkt (CB) des Kreises (200) des Gestells entspricht, anzuzeigen,
f) aus der prismatischen Abweichung des lichtundurchlässigen Zeichens (124A; 124B), die durch Vergleichen der in den Schritten a) und c) ausgeführten Erfassungen gemessen wird, eine korrigierte relative Position (CBc) des Bezugspunkts (CB) des Gestellkreises (200) in Bezug auf die Zentrierungsmarkierung (PC) abzuleiten, oder umgekehrt,
g) den Schatten der Zentrierungsmarkierung (PC) der Augenlinse (103) und das virtuelle Zentrierungsziel (CC) zur Übereinstimmung zu bringen.

2. Zentrierungsverfahren nach Anspruch 1, **dadurch gekennzeichnet, dass** die Schritte c) bis f) in einer Schleife nach den Schritten a) und b) ausgeführt werden, derart, dass fortgesetzt eine korrigierte relative Position (CBc) des Bezugspunkts (CB) des Gestellkreises (200) erhalten wird.

3. Zentrierungsverfahren nach Anspruch 2, **dadurch gekennzeichnet, dass** im Schritt c) der Schatten des Umrisses der zu zentrierenden Augenlinse (103) erfasst wird und im Schritt d) auf dem Anzeigeschirm (105) einerseits dieser Schatten des Umrisses der Linse (103) und andererseits ein virtuelles Bild (200), das den betreffenden Kreis des Gestells darstellt, angezeigt werden, wobei dieses virtuelle Bild des Gestellkreises (200) unabhängig von dem Bezugspunkt (CB) des Gestellkreises in Bezug auf das virtuelle Zentrierungsziel (CC), das dem Gestellkreis zugeordnet ist, versetzt wird, um die prismatischen Abweichungen, die durch die zu zentrierende Linse (103) eingeführt werden, auszugleichen.

4. Zentrierungsverfahren nach Anspruch 1, **dadurch gekennzeichnet, dass** die Schritte d) und e) in einer Schleife nach den Schritten h) und b) ausgeführt werden und die Schritte c) und f) nach dem Schritt g) ausgeführt werden.

5. Zentrierungsverfahren nach einem der vorhergehenden Ansprüche, **dadurch gekennzeichnet, dass** im Schritt e) auf dem Anzeigeschirm (105) einerseits direkt von den Erfassungs- und Analysemitteln (C) die Schatten der zu zentrierenden Augenlinse (103), der Zentrierungs- und/oder Achsenausrichtungsmarkierung (PC) der Augenlinse (103) und des lichtundurchlässigen Zeichens (124A; 124B), wenn es aktiviert ist, und andererseits das virtuelle Zentrierungsziel (CC) angezeigt werden, wobei das lichtundurchlässige Zeichen (124A; 124B) des lichtdurchlässigen Zeichenträgers (124) während einer Dauer, die ausreichend kurz ist, damit das menschliche Auge seinen Schatten auf dem Anzeigeschirm nicht wahrnimmt, intermittierend aktiviert wird.

6. Verfahren zum Zentrieren und Blockieren einer Augenlinse, das das Zentrieren der Linse mit dem Verfahren nach einem der vorhergehenden Ansprüche und das Aufbringen einer Greiferhebung an einer vorgegebenen Stelle auf der Augenlinse unter Berücksichtigung der korrigierten Position (CBc) des Bezugspunkts (CB) des Gestellkreises (200), die im Schritt f) berechnet wird, umfasst.

7. Zentrier- und Blockiervorrichtung, die Folgendes umfasst:
- ein Mittel (121, 114) für die Aufnahme der Augenlinse (103),
- beiderseits des Aufnahmemittels einerseits Mittel (S) für die Beleuchtung der Augenlinse (103), die auf dem Aufnahmemittel installiert ist, und andererseits Mittel (C) für die Erfassung und Analyse des von der Augenlinse durchgelassenen Lichts, und
- einen lichtdurchlässigen Träger (124), der ein lichtundurchlässiges Zeichen besitzt, das eine geometrische Figur darstellt, die eine maximale Abmessung über alles besitzt, die im Bereich von 2 bis 10 mm liegt, das aktivierbar und deaktivierbar ist und zwischen dem Aufnahmemittel und den Erfassungs- und Analysemitteln angeordnet ist, und
- eine programmierte elektronische Verarbeitungseinheit, um die Schritte c) bis f) des Zentrierungsverfahrens nach Anspruch 6 automatisch auszuführen.

8. Vorrichtung nach Anspruch 7, **dadurch gekennzeichnet, dass** die geometrische Figur (124B) einen Flächeninhalt im Bereich von 3 bis 80 mm² abdeckt.

9. Vorrichtung nach einem der Ansprüche 7 oder 8, **dadurch gekennzeichnet, dass** die geometrische Figur (124B) eine von einem Punkt oder von einem Kreuz verschiedene Form hat und von einer Markierung einer Augenlinse visuell unterscheidbar ist.

10. Vorrichtung nach einem der Ansprüche 7 bis 9, **dadurch gekennzeichnet, dass** die geometrische Figur (124B) ein Polygon, vorzugsweise ein Dreieck ist.

11. Vorrichtung nach einem der Ansprüche 7 bis 9, **dadurch gekennzeichnet, dass** die geometrische Figur ein Kreis oder ein Oval ist.

12. Vorrichtung nach einem der Ansprüche 7 bis 11, **dadurch gekennzeichnet, dass** das Aufnahmemittel, die Beleuchtungsmittel, die Erfassungs- und Analysemittel und der lichtdurchlässige Zeichenträger relativ zueinander fest sind.

13. Vorrichtung nach einem der Ansprüche 7 bis 12, **dadurch gekennzeichnet, dass** sie eine einzige optische Bahn zwischen den Beleuchtungsmitteln (S) und den Erfassungs- und Analysemitteln (C) umfasst.

14. Vorrichtung nach einem der Ansprüche 7 bis 13, **dadurch gekennzeichnet, dass** der lichtdurchlässige Zeichenträger (124) ein lichtdurchlässiger aktiver Schirm ist, der die geometrische Figur wahlweise anzeigen kann.

15. Vorrichtung nach Anspruch 14, **dadurch gekennzeichnet, dass** der lichtdurchlässige Schirm ein Flüssigkristallschirm ist.

16. Vorrichtung nach einem der Ansprüche 7 bis 15, **dadurch gekennzeichnet, dass** der lichtdurchlässige Zeichenträger ein Raster von sich wiederholenden und regelmäßigen lichtundurchlässigen Mustern umfasst.

17. Vorrichtung nach Anspruch 16, **dadurch gekennzeichnet, dass** der lichtdurchlässige Zeichenträger eine Hartmann-Matrix umfasst.

## Claims

1. A method of centering, in a rim (200) of a spectacles frame, an ophthalmic lens (103) that is provided with at least one center and/or axis marking (PC), the method comprising the steps consisting in:
a) for calibration purposes, acquiring and storing the shadow of an opaque sign (124A ; 124B) formed on a transparent sign support (124) interposed between lighting means (S) and acquisition means (C) while said support is being illuminated on its own by said lighting means;
b) superposing said ophthalmic lens and said transparent sign support;
c) acquiring and storing the shadow of said opaque sign of said support as detected by said ophthalmic lens while said ophthalmic lens and said support are being illuminated together by said lighting means;
d) using the acquisition means (C) to acquire the shadow of the center and/or axis marking (PC) of the ophthalmic lens (103) for centering while it is illuminated by said lighting means;
e) displaying on a display screen (105) firstly the shadow of the center and/or axis marking (PC) of the ophthalmic lens (103), and secondly a virtual centering target (CC) corresponding to the position desired for the center marking (PC) of the lens (103) relative to a reference point (CB) of the rim (200) of the frame;
f) from the prismatic deflection of the opaque sign (124A ; 124B) as measured by comparing the acquisitions of steps a) and c), deducing a corrected relative position (CBc) for the reference point (CB) of the frame rim (200) relative to the center marking (PC), or vice versa; and
g) putting the shadow of the centering marking (PC) of the ophthalmic lens (103) into coincidence with the centering virtual target (CC).

2. A centering method according to claim 1, **characterized in that** steps c) to f) are performed in a loop after performing steps a) and b), so as to continuously obtain a corrected relative position (CBc) for the reference point (CB) of the frame rim (200).

3. A centering method according to claim 2, **characterized in that** in step c), the shadow of the outline of the ophthalmic lens (103) for centering is acquired and in step d) there is displayed on the display screen (105) firstly said shadow of the outline of the lens (103) and secondly a virtual image (200) representative of the corresponding rim of the frame, being offset independently of the reference point (CB) of said frame rim relative to the centering virtual target (CC) associated with said frame rim in order to compensate for the prismatic deflections induced by the lens (103) for centering.

4. A centering method according to claim 1, **characterized in that** steps d) and e) are performed in a loop, following steps a) and b), and steps c) and f) are performed after step g).

5. A centering method according to any preceding claim, **characterized in that** in step e), there is displayed on the display screen (105), firstly directly from the acquisition and analysis means (C), the shadows of the ophthalmic lens (103) for centering, of the center and/or axis marking (PC) of said ophthalmic lens (103), and of the opaque sign (124A; 124B) while it is being activated, and secondly the centering virtual target (CBc), the opaque sign (124A ; 124B) of the transparent sign support (124) being activated intermittently for a duration that is short enough to ensure that the human eye does not perceive its shadow on the display screen.

6. A method of centering and blocking an ophthalmic lens, the method comprising centering said lens using the method according to any preceding claim, and depositing a handling peg at a predetermined location on said ophthalmic lens, account being taken of the corrected position (CBc) of the reference point (CB) of the frame rim (200) as calculated in step f).

7. A centering and blocking device comprising:
• receiver means (121, 114) for receiving the ophthalmic lens (103);
• on either side of said receiver means, firstly lighting means (S) for illuminating the ophthalmic lens (103) installed on said receiver means, and secondly acquisition and analysis means (C) for acquiring and analyzing the light transmitted through said ophthalmic lens; and
• a transparent support (124) including an opaque sign representing a geometrical figure presenting a maximum outside dimension lying in the range 2 mm to 10 mm, that is activatable and deactivatable, and that is disposed between said receiver means and said acquisition and analysis means, and
• an electronic processing unit programed to automatically implement steps c) to f) of the method of claim 6.

8. A device according to claim 7, **characterized in that** the geometrical figure (124B) occupies an area lying in the range 3 mm² to 8 0 mm².

9. A device according to claim 7 or claim 8, **characterized in that** the geometrical figure (124B) is of a shape that is different from a point or a cross, being suitable for being distinguished visually from a marking on the ophthalmic lens.

10. A device according to any one of claims 7 to 9, **characterized in that** the geometrical figure (124B) is a polygon, preferably a triangle.

11. A device according to any one of claims 7 to 9, **characterized in that** the geometrical figure is a circle or an oval.

12. A device according to any one of claims 7 to 11, **characterized in that** said receiver means, said lighting means, said acquisition and analysis means, and said transparent sign support are held stationary relative to one another.

13. A device according to claim 7 to claim 12, **characterized in that** it includes a single optical path between said lighting means (S) and said acquisition and analysis means (C).

14. A device according to any one of claims 7 to 13, **characterized in that** said transparent sign support (124) is a transparent active screen suitable for selectively displaying the geometrical figure.

15. A device according to claim 14, **characterized in that** said transparent screen is a liquid crystal screen.

16. A device according to any one of claims 7 to 15, **characterized in that** said transparent sign support comprises a regular array of repeated opaque patterns.

17. A device according to claim 16, **characterized in that** said transparent sign support comprises a Hartmann matrix.
